## Europäisches Patentamt
## European Patent Office
## Office européen des brevets

(19)

(11) Veröffentlichungsnummer : **0 022 068**
**B1**

(12)

# EUROPÄISCHE PATENTSCHRIFT

(45) Veröffentlichungstag der Patentschrift :
22.09.82

(21) Anmeldenummer : 80810182.8

(22) Anmeldetag : 02.06.80

(51) Int. Cl.³ : **B 01 F 15/02, B 01 J 4/00**

(54) Vorrichtung und Verfahren zur Verteilung von Dosierkomponenten in Rührmedien sowie Verwendung der Vorrichtung.

(30) Priorität : 07.06.79 CH 5311/79

(43) Veröffentlichungstag der Anmeldung :
07.01.81 (Patentblatt 81/01)

(45) Bekanntmachung des Hinweises auf die Patenterteilung : 22.09.82 Patentblatt 82/38

(84) Benannte Vertragsstaaten :
**CH DE FR GB IT LI**

(73) Patentinhaber : **CIBA-GEIGY AG**
**Patentabteilung Postfach**
**CH-4002 Basel (CH)**

(72) Erfinder : **Havalda, Paul**
**Im Lee 5**
**CH-4144 Arlesheim (CH)**

(56) Entgegenhaltungen :
DE B 1 245 912
DE C 296 210
FR A 1 494 289
FR A 2 213 787
GB A 810 926
US A 3 262 218

EP 0 022 068 B1

Imprimerie Jouve, 18, rue St-Denis, 75001 Paris, France

## Vorrichtung und Verfahren zur Verteilung von Dosierkomponenten in Rührmedien sowie Verwendung der Vorrichtung

Die Erfindung betrifft eine Vorrichtung und ein Verfahren gemäss den Oberbegriffen der Ansprüche 1 und 12 sowie die Verwendung einer solchen Vorrichtung.

Es ist allgemein bekannt und wurde durch Messungen bestätigt, dass nach den herkömmlichen Methoden und mit den herkömmlichen Mitteln, gemäss denen die Dosierkomponente entweder direkt auf Mediumsniveau oder mittels eines Tauchrohres in das Rührmedium eingeleitet wird, eine homogene Verteilung von Dosierkomponenten in einem überwiegend tangential strömenden Rührmedium, insbesondere bei stehenden Grossfabrikations-Rührbehältern, nicht erzielt werden kann, sondern vielmehr immer wieder Unterschiede zwischen dem oberen und unteren Teil des Rührmediums auftreten. Ausserdem neigen die bekannten Einleitvorrichtungen, insbesondere bei hochreaktiven Rührmedium-Dosierkomponenten-Kombinationen, leicht zu Verstopfungen.

Durch die vorliegende Erfindung sollen nun ein Verfahren und eine Vorrichtung geschaffen werden, die eine gleichmässigere Verteilung der Dosierkomponente im Rührmedium unter gleichzeitiger Vermeidung von Verstopfungen ermöglichen.

Eine weitere Aufgabe der Erfindung besteht in der Schaffung eines Verfahrens zur knollen- und schaumfreien Verteilung von Kalilauge in einer gerührten G-Säure-Lösung bei der Fällung von Dikaliumsalz dieser Säure und eines Verfahrens zur gleichmässigen Verteilung von Natronlauge als Dosierkomponente bei Epoxidierungsreaktionen.

Die der Erfindung zugrundeliegenden Aufgaben werden durch die in den Ansprüchen 1 bis 12 beschriebenen Mittel und Massnahmen gelöst.

Im folgenden wird die Erfindung anhand der beigefügten Zeichnungen näher erläutert.

Figur 1 zeigt eine vereinfachte schematische Darstellung eines stehenden Rührbehälters, der mit der erfindungsgemässen Vorrichtung (Stossverteiler) zur gleichmässigen Verteilung von Dosierkomponenten im Rührmedium versehen ist ;

Figur 2 zeigt die Vorrichtung von Fig. 1 in grösserer, geschnittener Darstellung ;

Figur 3 zeigt eine vereinfachte schematische Darstellung einer weiteren Ausführungsform der Vorrichtung gemäss vorliegender Erfindung ;

Figur 4 zeigt einen Schnitt durch ein Detail einer weiteren Ausführungsform der Vorrichtung ;

Figur 5 zeigt die vereinfachte schematische Darstellung einer stehenden Rühranlage, die mit einer weiteren Ausführungsform des erfindungsgemässen Stossverteilers versehen ist ;

Figur 6 zeigt einen Querschnitt nach der Linie VI-VI gemäss Fig. 5 ;

Figur 7 zeigt einen Teil-Längsschnitt einer weiteren Ausführungsform der erfindungsgemässen Vorrichtung ;

Figur 8 zeigt eine Schnittansicht der Verteilkammer nach der Linie VIII-VIII der Fig. 7 ;

Figur 9 zeigt einen Längsschnitt des Tragrohres der Ausführungsform gemäss Fig. 7 in kleinerem Massstab ;

Figur 10 zeigt einen Teilschnitt nach der Linie X-X gemäss der Fig. 9 in vergrösserter Detaildarstellung ;

Figur 11 zeigt schematisch, wie eine Förderpumpe für die Dosierkomponente mit der Verteilkammer zu einem fahrbaren bzw. tragbaren Aggregat kombinierbar ist ;

Figur 12 zeigt eine vereinfachte Darstellung einer Ausführungsform, bei der nur das Tragrohr der Zuleitungsstellen im Rührbehälter angeordnet ist ;

Figur 13 zeigt eine vereinfachte Darstellung einer weiteren Ausführungsform, bei der das Tragrohr der Zuleitungsstellen als ein Finger-Stromstörer ausgebildet ist ;

Figur 14 zeigt einen Detail-Schnitt durch eine Zuleitungsstelle in Form einer Düse mit Rückschlagventil ;

Figur 15 zeigt ein Prinzipschema einer weiteren Ausführungsform in Kombination mit einem Rührkessel mit einem darin exzentrisch angeordneten Leitrohrmischer ; und

Figur 16 zeigt schematisch eine Anordnung für z.B. Epoxydierungsreaktionen, bei welchen z.B. 50 %ige Natronlauge als zerstäubte Dosierkomponente in die durch die Rotation des Rührmediums gebildete Trombe stossweise eingespeist wird.

In den Figuren sind absolut gleiche Teile mit denselben Bezugsziffern versehen. Nicht ganz gleiche, aber einander entsprechende Teile der verschiedenen Ausführungsformen sind durch sich jeweils um 100, 200, 300 etc. unterscheidende Bezugsziffern gekennzeichnet.

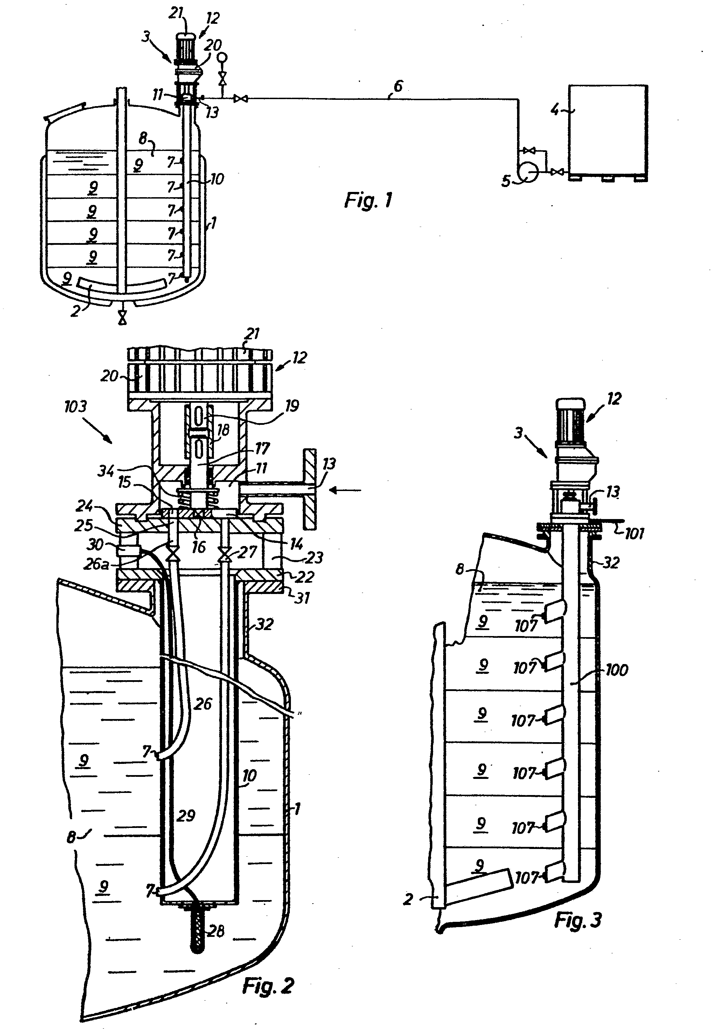

Fig. 1 zeigt einen senkrecht stehenden zylindrischen Rührbehälter 1, dessen Verhältnis von Höhe zu Durchmesser 1,5 beträgt. Der Rührbehälter 1 ist mit einem relativ langsam laufenden Rührer 2 und einem Stossverteiler 3 ausgerüstet. Aus einem Gefäss 4 wird die zu dosierende Komponente mittels einer Förderpumpe 5 über eine Rohrleitung 6, die mit entsprechender Armatur versehen ist, und über Zuleitungsstellen 7 des Stossverteilers 3 in das Rührmedium 8 stossweise gespeist. Die einzelnen Zuleitungsstellen 7 sind in etwa in gleichen Abständen übereinander angeordnet, so dass jede in etwa einen gleich grossen Volumenteil versorgt.

Wie aus Fig. 2 deutlicher ersichtlich, umfasst der Stossverteiler ein Tragrohr 10, einen Antrieb 12 und eine Verteilkammer 11. Die Verteilkammer 11, die mit einem Einlass 13 für die Dosierkomponente ausgestattet ist, besitzt ein drehbar angeordnetes scheibenförmiges Verteilelement 14. Das Verteilelement 14 mit einem Verbindungsloch 15 wird mittels eines rechteckigen Mitnehmers 16 einer abgedichteten Welle 17 über eine Kupplung 18 mit einem Zapfen 19 eines Getriebes 20 von einem Elektromotor 21 angetrieben. Die Geschwindigkeit der Dosierflüssigkeit im Verbindungsloch 15 beträgt von ca. 1 bis 7 m/s, vorzugsweise 3 m/s. Die Drehzahl des Verteilelementes 14 kann regulierbar sein und beträgt mindestens 10 min$^{-1}$. Ein am Ende des Tragrohres 10 angeordneter Flansch 22, Stege 23 und ein oberer Flansch 24, auf dem die Verteilkammer 11 befestigt ist, bilden die mechanische Verbindung des Tragrohres 10 mit der Verteilkammer 11. Eine Druckfeder 34 drückt das Verteilelement 14 gegen den oberen Flansch 24. Der obere Flansch 24 weist einige, z.B. sechs, in einer konzentrischen kreislinie gleichförmig angeordnete Löcher 25 mit je einem Rohrstutzen 26a auf. Der Teilkreis, den das Verbindungsloch 15 bei Rotation des Verteilelementes 14 beschreibt, ist deckungsgleich mit der Kreislinie, entlang der die Löcher im oberen Flansch 24 angeordnet sind. Die Zuleitungsstellen 7 sind durch Rohrleitungen bzw. Schläuche 26 und Absperrventile 27 mit den einzelnen Rohrstutzen 26a verbunden. Die Absperrventile 27 dienen zur selektiven Ausschaltung der Zuleitungsstellen 7 bei Aenderung der Höhe des Rührmediums 8. Die Reihenfolge dieser Absperrventile 27 entspricht den höhenweise angeordneten Zuleitungsstellen 7. Im unteren Teil des Tragrohres 10 befindet sich ein Fühler (Messwertgeber) 28 zur Temperaturmessung des Rührmediums 8. Die Leitung 29 ist von der Messstelle innerhalb des Tragrohres 10 bis zu einer Stelle bzw. Steckdose 30 ausserhalb des Mediumsraumes und von dort weiter zum Messapparat (nicht dargestellt) geführt. Der Stossverteiler 103 ist mit seinem Flansch 22 am Flansch 31 mit dem Rohrstutzen 32 des Rührbehälters 1 befestigt.

Fig. 3 zeigt eine andere Form des Tragrohres, und zwar ohne Absperrventile, wobei das Tragrohr einen schwenkbaren Finger-Stromstörer 100 bildet. Der gewünschte Anstellwinkel des Stromstörers 100 relativ zu einer Radialebene kann durch einen Hebel 101 eingestellt werden.

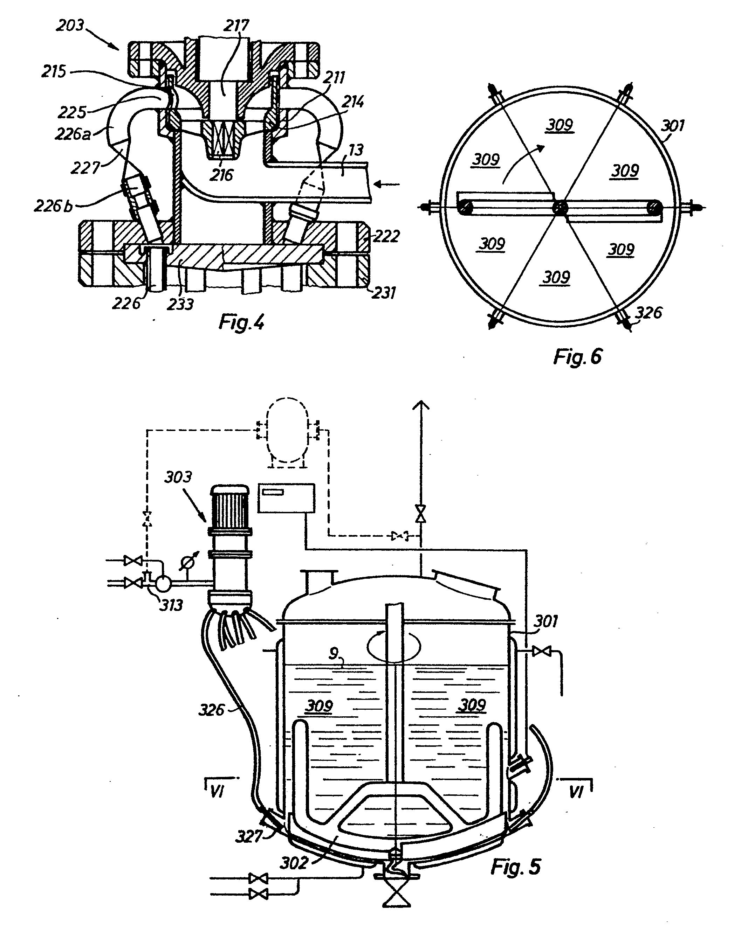

Fig. 4 zeigt eine weitere Ausführungsform einer Verteilkammer. Bei dieser Ausführungsform ist die Reibung beider Dichtflächen, und zwar der des zylindrischen Verteilelementes 214 und der Verteilkammer 211, wesentlich herabgesetzt oder vollständig beseitigt. Die Rohrleitungen 226 münden in einen Flansch 233, der an dem Flansch 231 mit dem Rohrstutzen 32 des Rührbehälters 1, Fig. 2, angeordnet ist. Die Rohrstücke 226a, 226b und die Absperrventile 227 ergänzen die Rohrleitungen bis zur Verteilkammer 211. Im Betrieb findet die Zufuhr der flüssigen Dosierkomponente durch den Einlass 13 statt, und die Dosierkomponente fliesst durch die Verteilkammer 211, Rohrstücke 226a, 226b, Absperrventile 227 und Rohrleitungen 226 mit den Zuleitungsstellen 7 (Fig. 2) bzw. 107 (Fig. 3) abwechselnd in das Rührmedium 9. Die wechselnde Verbindung des Verteilkammer-Raumes mit den einzelnen Zuleitungsstellen wird durch das Verbindungsloch 215 des rotierenden Verteilelementes 214 ermöglicht. Die Dosierkomponente wird dann in dem überwiegend tangential bewegten Rührmedium gleichmässig verteilt.

Fig. 5 und 6 zeigen eine weitere Ausführungsform, und zwar mit einem vertikalen, zylindrischen Rührbehälter 301, in dem ein relativ langsam laufender Rührer 302 angeordnet ist. In das überwiegend rotierende Rührmedium 9 wird eine hier z.B. gasförmige Dosierkomponente durch die an der Wand des Rührbehälters 301 bodennah angeordneten Zuleitungsstellen 327 eingeleitet und im Rührmedium gleichmässig verteilt. Die einzelnen Zuleitungsstellen 327 sind gleichmässig über den Behälterumfang verteilt angeordnet, so dass die einzelnen Volumenteile 309 des Rührmediums 9 gleichmässig mit Dosierkomponente versorgt werden. Der Stossverteiler 303, bei dem das Tragrohr durch die Behälterwand ersetzt ist, ist im wesentlichen ausserhalb des Rührbehälters 301 angeordnet. Im Betrieb wird das zu zudosierende Gas, eventuell kombiniert mit Flüssigkeit, durch den Einlass 313 in den Stossverteiler 303 eingeleitet. Die nicht im Rührmedium verbrauchte gasförmige Komponente kann auch aus dem Behälterraum abgesaugt und durch einen Förderapparat an den Einlass 313 zurückgeführt werden (gestrichelte Linien).

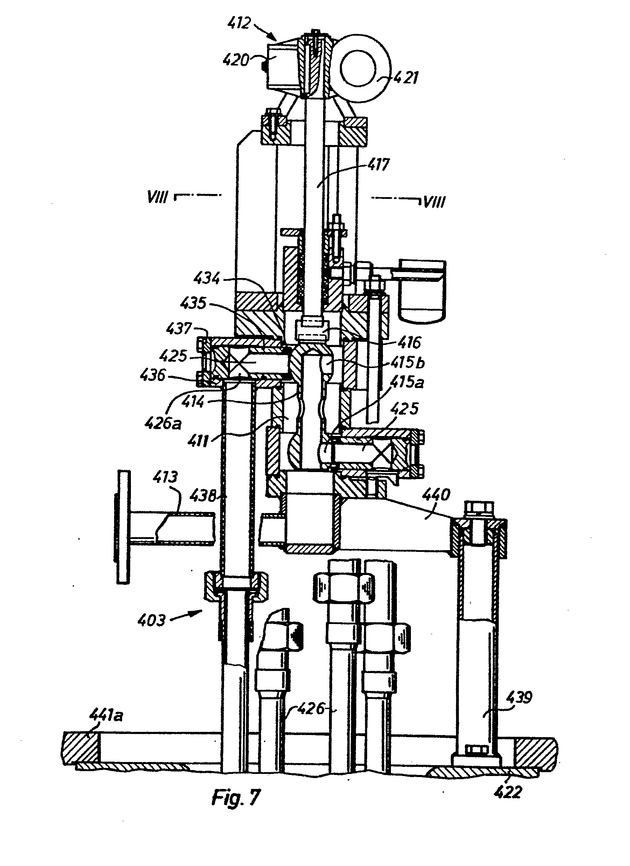

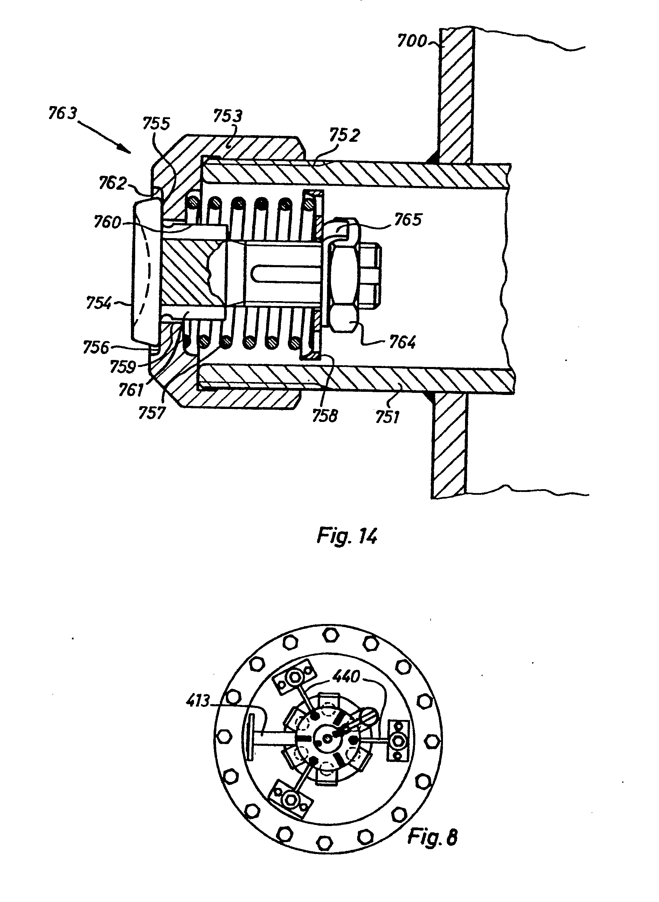

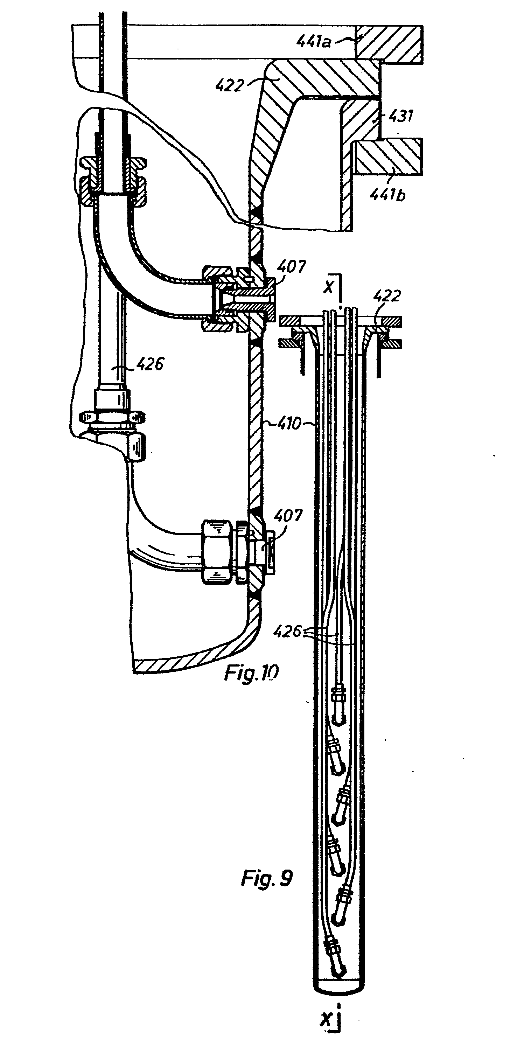

Eine weitere Ausführungsform der vorliegenden Erfindung ist in Fig. 7 bis 10 dargestellt. Die Verteilkammer 411 besitzt ein Zwei-Kugel-Verteilelement 414, das zwischen sechs Dichtungen 434 eines auswechselbaren Hohlkörpers 435 drehbar gelagert ist. Der Hohlkörper 435 ist in einem Rohrstutzen 436 montiert und durch einen Deckel 437 unterstützt. Die Verbindung zwischen dem Rohrstutzen 436 und der Rohrleitung 426 bildet ein Rohrstück 438. Der Antrieb 412 besteht aus einem Elektromotor 421 und einem Schneckengetriebe 420 mit einer angetriebenen und abgedichteten Welle 417, die durch einen Mitnehmer 416 die Rotation des Verteilelementes 414 bewirkt. Die Verteilkammer 411 ist mit dem Tragrohr 410 mittels eines Flansches 422, dreier Rohrstege 439 und dreier Halterungen 440 zusammenmontiert. Die radialen Oeffnungen 415a, 415b beider Kugeln des Verteilelementes 414 sind in derselben Ebene angeordnet, so dass in der Lage der Uebereinstimmung der Oeffnung 415a des Verteilelementes 414 mit der Bohrung 425 des Hohlkörpers 435 eine volle Dosierung durch eine einzige Zuleitungsstelle erfolgt. Diese sind im wesentlichen als radial angeordnete Düsen 407 ausgebildet. Die Austrittsgeschwindigkeit der flüssigen Dosierkomponente beträgt von ca. 2 bis 20 m/s, vorzugsweise 10 m/s. Der Stossverteiler 403, der vor allem für chemisch aggresive Umgebung bestimmt ist, ist durch Flansche 441a und 441b am Flansch 431 des Rührbehälters befestigt. Diese Ausführungsform des Stossverteilers ohne Absperrventile ist konstruktiv und funktionell ähnlich der gemäss Fig. 4.

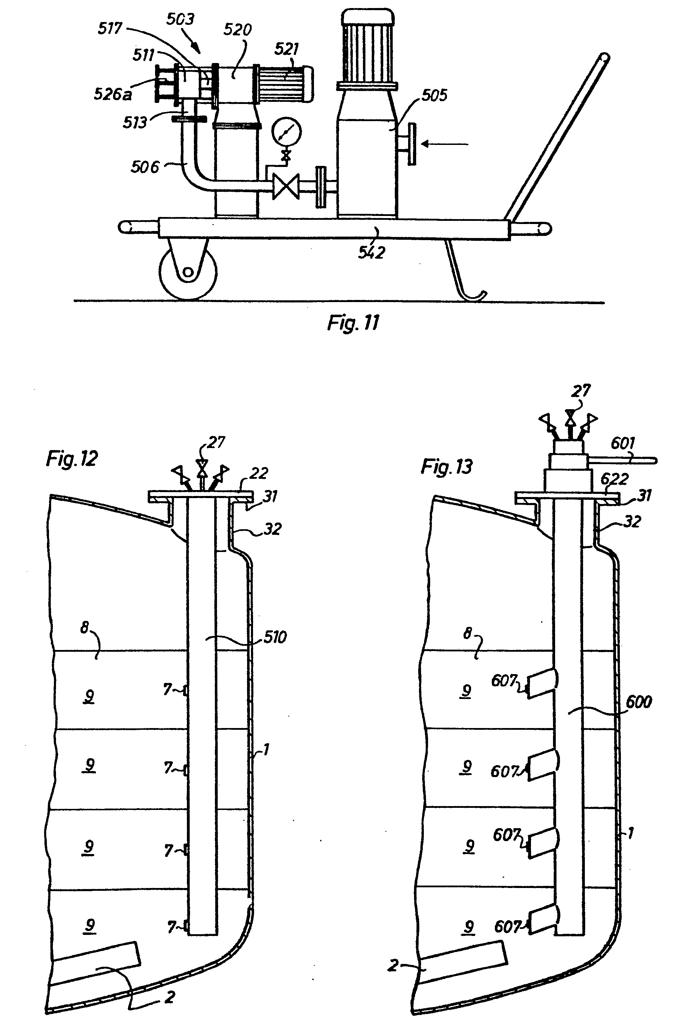

Die oben beschriebenen Ausführungsformen können selbstverständlich im Rahmen der vorliegenden Erfindung modifiziert werden. So zeigt zum Beispiel Fig. 11 eine Variante, bei welcher der Stossverteiler 503 auf einer Rahmenkonstruktion 542 zusammen mit einer Förderpumpe 505 montiert ist und so ein tragbares bzw. fahrbares Aggregat mit dieser bildet. Bei dieser Ausführungsform ist, wie aus Fig. 12 ersichtlich, das Tragrohr 510 der Zuleitungsstellen 7 als eine selbständige apparative Einheit im Rührbehälter 1 einmontiert. Das Tragrohr kann, wie Fig. 13 zeigt, auch als Finger-Stromstörer 600 ausgebildet sein.

Als bewegbares Verteilelement kann anstelle der gezeigten Ausführungsformen z.B. auch eine schwenkbare, mit einer Verbindungsöffnung versehene Platte oder ein geradlinig bewegter Hohlkolben verwendet werden, welcher mit einer radialen Verbindungsöffnung versehen ist, und wobei die Verteilkammer dann mit radialen Austritts-Rohrstutzen ausgestattet wäre.

Zur Dämpfung von Druckstössen kann der Einlass für die Dosierkomponente mit einem Druckluftdämpfer versehen sein.

Die Zuleitungsstellen können auch an einem vorzugsweise rotierbaren Träger, wie z.B. einer Rührwelle angeordnet sein.

Bei hoher Reaktionsgeschwindigkeit des Rührmediums mit der Dosierkomponente empfiehlt sich die Ausbildung der Zuleitungsstellen am Tragrohr als Rückschlagventile bzw. -düsen.

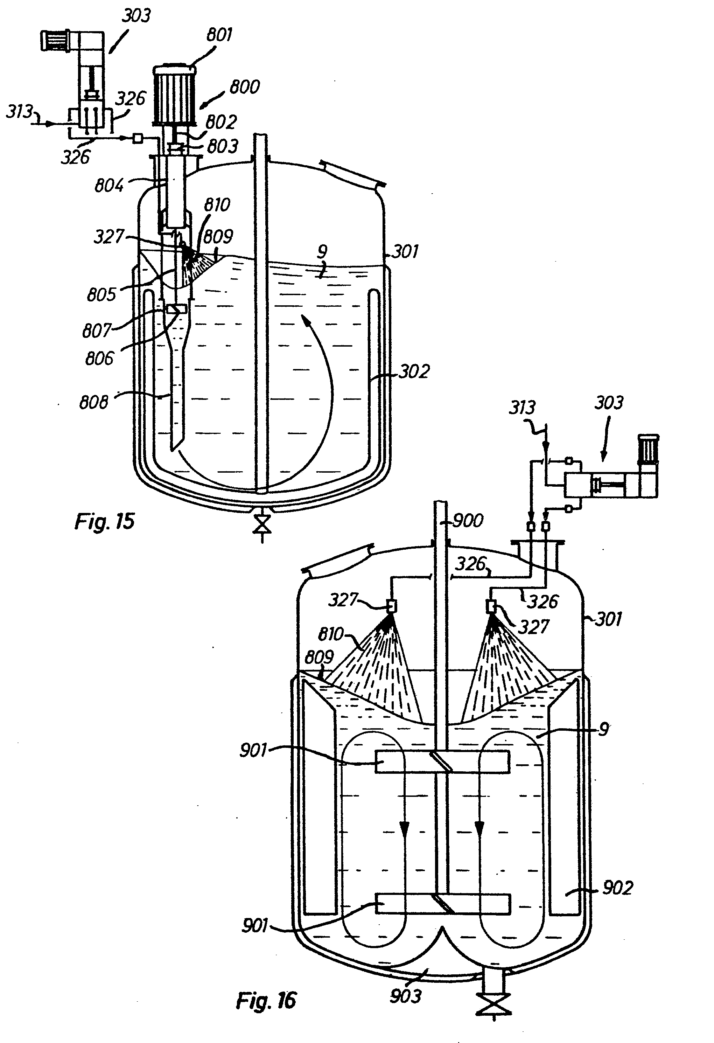

Fig. 14 zeigt eine rein beispielsweise Ausbildung eines geeigneten Rückschlagventils. An einem Rohrstutzen 751 des Tragrohres 700 ist mittels des Gewindes 752 eine Mutter 753 befestigt. In der Mutter 753 befindet sich eine Ventilstange 754, die mit ihrer Fläche 755 an den Ventilsitz 756 der Mutter 753 durch eine Druck-Spiralfeder 757 angepresst wird, wobei die Spiralfeder 757 sich mit einem Ende an einer entsprechenden Versenkung der Mutter 753 und mit dem anderen Ende an einer schalenförmigen Unterlagscheibe 758 stützt. Die Ventilstange 754 ist in der Bohrung 759 der Mutter 753 mittels ihres zylindrischen Teils 760 verschiebbar gelagert, welcher mehrere Rinnen 761 aufweist. Zwecks Erzeugung eines radialen Strahles ist der flache Ventilsitz 756 an seinem Umfang als zylinderische Düse 762 ausgebildet. Die Einstellung des Oeffnungsdruckes des Feder-Rückschlagventils 763 wird durch die Mutter 764 ermöglicht und ihre Arretierung ist durch das Sicherungsblech 765 gewährleistet.

Fig. 15 zeigt einen Stossverteiler 303 in Kombination mit einem Rührkessel 301, in welchen ausser einem koaxialen Ankerrührer 302 noch ein hochtouriger Leitrohrmischer 800 exzentrisch eingebaut ist. Die Zuleitungsstellen 327, von denen nur eine dargestellt ist, sind konzentrisch im Kreis um die Welle 805 des Mischers 800 angeordnet. Die in die Rührmediums-Trombe 809 stossweise zerstäubt eingespeiste Dosierkomponente wird in der Trombe eingesaugt und gut mit dem Rührmedium vermischt. Sie gelangt durch den Teil 807 des Austrittsrohrs 808 nach unten und wird dann gleichmässig im Rührmedium verteilt.

In Fig. 16 ist eine weitere Variante eines mit einem Stossverteiler 303 ausgerüsteten Rührkessels 301 gezeigt. Hier befinden sich die Zuleitungsstellen 327 auf einem zur Achse 900 des Turborührers 901 konzentrischen Kreis oberhalb der Rührmedium-Trombe 809. Im Rührkessel sind stromstörende bzw. stromleitende Einbauten 902 bzw. 903 vorgesehen. Diese Anordnung eignet sich besonders gut für Epoxidierungsreaktionen, da hier die Dosierkomponente auf eine sehr grosse Oberfläche aufgesprüht wird. Versuche haben gezeigt, dass dadurch die Qualität des hergestellten Produkts erheblich verbessert wird. Durch die stossweise Einspeisung wird die Verstopfungsgefahr der Zuleitungsstellen vermieden.

Beispiel 1

Absatzweise Fällung von Naphtol-(2)-disulfonsäure-(6,8)-dikaliumsalz (G-Salz).

In einem 10'000 1-Email-Rührkessel, versehen mit einem Impeller-Rührer, wird 5'590 kg G-Säure-Lösung vorgelegt. 1 398,68 kg Kalilauge 50 %-ig werden aus reaktionstechnischen Gründen bei Temperatur von 97 °C dosiert. Da der Siedepunkt bei ca. 105 °C liegt und die Reaktion exotherm verläuft, muss die Kalilauge feinverteilt eindosiert werden, um ein starkes örtliches Sieden zu vermeiden, andernfalls treten Klumpen und Schaumbildung auf. Als Spezialausrüstung für die Zugabe von KOH 50 %-ig wird der Stossverteiler (Fig. 1) benützt, der aus einem, mehrere Zuleitungsstellen aufweisenden Tragrohr mit einer gekoppelten Verteilkammer besteht. Das Tragrohr des Stossverteilers hat unter dem Niveau sechs auf diversen Mediumshöhen in einem Abstand von je 30 cm zueinander radial angeordnete Zuleitungsstellen. Das scheibenförmige Verteilelement dreht sich mit 57 Umdrehungen pro min, entsprechend 342 Flüssigkeitsstrahlen pro min. Die KOH 50 %-ig wird mit einer mehrstufigen Zentrifugalpumpe unter einem Druck von 10 bar durch die Zuleitungsstellen (Düsen) befördert.

Die durch die Fällung entstandene Suspension ist homogen und es wird kein örtliches Sieden und keine Schlamm- und Klumpenbildung beobachtet. So kann die Bildung von Schlamm und von krusten ohne Verstopfung der Zuleitungsstellen vollständig verhindert werden.

Beispiel 2

Wässrige Kristallisation von Methidathion, absatzweise.

In einem 2 200 l-Email-Rührkessel, versehen mit einem Ankerrührer, wird die wässrige, auf ca. 40 °C erwärmte Methidation-Emulsion (1 : 1) auf $p_H$-Wert von 6 bis 7,5 mit konz. Ammoniak eingestellt. Bei mässigem Rühren (ca. Rührer-Umfangsgeschwindigkeit ca. 3 m/s) wird die Emulsion auf eine Temperatur von 26-27 °C abgekühlt.

Bei dieser Temperatur wird eine Verweilzeit bis ca. 16 min. eingehalten, wobei durch die frei-werdende Kristallisationswärme die Mediums-temperatur um einige Grade steigt. Nach dieser Zeit erfolgt eine Kühlung bis auf ca. 12 °C. Mit Hilfe des erfindungsgemässen Stossverteilers, dessen Zuleitungsstellen bodennahe nach dem Umfang gleichmässig angeordnet sind, wird Luft mit geringem Wasserzusatz ins Kristallisationsmedium eingeblasen. Dadurch wird unter Gewährleistung konstanter Durchflussmengen durch alle Zuleitungsstellen eine allfällige Verkrustung erheblich herabgesetzt (Fig. 5).

Der beschriebene Stossverteiler kann auch im Zusammenhang mit anderen als den beschriebenen Anordnungen und Formen von Rührbehältern, wie z.B. horizontale Rührbehälter, Kolonnen, Mischer von körnigen oder pulverförmigen Substanzen angewandt werden. Weiter kann er auch bei Rührbehältern mit schnell laufenden Rührern zum Einsatz gelangen. Bei den letzten, wie z.B. bei den Schaufelrührern, wird das mit den Zuleitungsstellen versehene ringförmige Tragrohr in der Nähe des Rührers konzentrisch angeordnet. In einem anderen Anwendungsfall können die Zuleitungsstellen an der Behälterwand befestigt sein.

Anstelle des Verteilelements, welches die Dosierkomponente den einzelnen Zuleitungsstellen sequentiell zuführt, können auch mehrere Pumpen vorgesehen sein, die zeitlich gestaffelt je eine Zuleitungsstelle speisen. Ferner kann eine automatische Steuerung vorgesehen sein, die bei änderndem Niveau im Rührkessel automatisch die über dem Niveau liegenden Zuleitungsstellen sperrt.

**Ansprüche**

1. Reaktionskessel mit einem Rührorgan und einer Vorrichtung zum dosierten Einbringen einer Dosierkomponente in das Rührmedium, dadurch gekennzeichnet, dass die Einbringvorrichtung mehrere gleichmässig über die Höhe und/oder den Umfang des Kessels verteilte Zuleitstellen und eine Fördereinrichtung umfasst, welche die Dosierkomponente den Zuleitstellen zeitlich aufeinanderfolgend stossweise zuführt.

2. Kessel nach Anspruch 1, dadurch gekennzeichnet, dass die Fördereinrichtung eine Förderpumpe und ein die einzelnen Zuleitstellen sequentiell mit der letzteren verbindendes Verteilorgan aufweist.

3. Kessel nach Anspruch 2, dadurch gekennzeichnet, dass die Zuleitstellen vertikal übereinander an einem Träger angeordnet sind und mit diesem eine bauliche Einheit bilden, welche als Ganzes aus dem Kessel entfernbar ist.

4. Kessel nach Anspruch 3, dadurch gekennzeichnet, dass der Träger mit den Zuleitstellen und das Verteilorgan eine bauliche Einheit bilden.

5. Kessel nach Anspruch 2, dadurch gekennzeichnet, dass die Förderpumpe und das Verteilorgan eine bauliche Einheit bilden, mit welcher die Zuleitstellen über Leitungen verbunden sind.

6. Kessel nach Anspruch 1, 2 oder 5, dadurch gekennzeichnet, dass die Zuleitstellen in Bodennähe oder über dem Niveau des Rührme-diums über den Umfang des Kessels verteilt angeordnet sind.

7. Kessel nach einem der vorangehenden Ansprüche, dadurch gekennzeichnet, dass die Zuleitstellen als Rückschlagventile ausgebildet bzw. mit solchen versehen sind.

8. Kessel nach Anspruch 3, dadurch gekennzeichnet, dass der Träger mit den Zuleitstellen als Fingerstromstörer ausgebildet und vorzugsweise um seine vertikale Achse schwenkbar angeordnet ist.

9. Kessel nach Anspruch 3, dadurch gekennzeichnet, dass der Träger als Rohr ausgebildet ist, und dass die zu den Zuleitstellen führenden Verbindungsleitungen innerhalb des Rohrs verlaufen.

10. Kessel nach einem der vorangehenden Ansprüche, dadurch gekennzeichnet, dass die Fördereinrichtung so ausgelegt ist, dass die Dosierkomponente die Zuleitstellen mit einer Austrittsgeschwindigkeit von 2 bis 20 m/sec verlässt.

11. Kessel nach Anspruch 1, dadurch gekennzeichnet, dass die Fördereinrichtung für jede Zuleitungsstelle eine eigene Förderpumpe aufweist.

12. Verfahren zum Zuführen einer flüssigen Dosierkomponente in einen Reaktionskessel, in welchem ein Rührmedium mittels eines um eine im wesentlichen vertikale Achse rotierenden Rührers vorwiegend tangential gerührt wird, da-durch gekennzeichnet, dass die Dosierkompo-nente zyklisch abwechselnd über mehrere gleichmässig über die Höhe und/oder den Umfang des Kessels verteilte Zuleitungsstellen stossweise in das Medium eingebracht wird.

13. Verwendung der Vorrichtung nach einem der Ansprüche 1-11 zum Zuführen von Natronlauge bei Epoxidierungsreaktionen.

14. Verwendung der Vorrichtung nach einem der Ansprüche 1-11 zum Zuführen von Kalilauge in Naphtol-(2)-disulfonsäure-(6,8) bei der Fällung des Dikaliumsalzes dieser Säure.

**Claims**

1. Reaction tank with an agitator member and a device for the quantitively regulated introduction of a dose component into the agitating medium, characterized in that the introducing device comprises several feed points evenly distributed over the height and/or circumference of the tank and a conveyor mechanism which delivers the dose component to the feed points intermittently in chronological succession.

2. Tank according to Claim 1, characterized in that the conveyor mechanism has a feed pump and a distribution member connecting the individual feed points sequentially with the latter.

3. Tank according to Claim 2, characterized in that the feed points are arranged vertically one over the other on a support and with this form a structural unit, which may be removed in its entirety from the tank.

4. Tank according to Claim 3, characterized in that the support with the feed points and the distribution member form a structural unit.

5. Tank according to Claim 2, characterized in that the feed pump and the distribution member form a structural unit, with which the feed points are connected via ducts.

6. Tank according to Claim 1, 2 or 5, characterized in that the feed points are arranged close to the base or above the level of the agitating medium distributed over the circumference of the tank.

7. Tank according to one of the preceding Claims, characterized in that the feed points are formed as non-return valves or are provided with such valves.

8. Tank according to Claim 3, characterized in that the support with the feed points is formed as a finger current disruptor and is preferably pivotably arranged about its vertical axis.

9. Tank according to Claim 3, characterized in that the support is formed as a tube, and that the connecting ducts leading to the feed points run inside the tube.

10. Tank according to one of the preceding Claims, characterized in that the conveyor mechanism is designed such that the dose component leaves the feed points at a delivery speed of 2 to 20 m/sec.

11. Tank according to Claim 1, characterized in that the conveyor mechanism has an individual feed pump for each feed point.

12. Method for the delivery of a fluid dose component into a reaction tank, in which an agitating medium is agitated predominantly tangentially by means of an agitator rotating about a substantially vertical axis, characterized in that the dose component is introduced intermittently into the medium cyclically alternating via several feed points distributed evenly over the height and/or the circumference of the tank.

13. Application of the device according to one of Claims 1-11, for the delivery of soda lye in epoxydation reactions.

14. Application of the device according to one of Claims 1-11, for the delivery of potash lye in naphthol-(2)-disulphonic acid-(6,8) in the precipitation of the di-potassium salt of this acid.

## Revendications

1. Récipient à réaction avec un organe d'agitation et un dispositif pour introduire en dosant un composant de dosage dans le milieu agité, caractérisé en ce que le dispositif d'introduction comporte plusieurs positions d'arrivée distribuées uniformément sur la hauteur et/ou la périphérie du récipient et un dispositif de circulation qui fournit par intermittence le composant de dosage aux positions d'arrivée, les unes après les autres dans le temps.

2. Récipient selon la revendication 1, caractérisé en ce que le dispositif de circulation comporte une pompe à circulation et un organe distributeur qui relie séquentiellement les positions d'arrivée individuelles à cette dernière.

3. Récipient selon la revendication 2, caractérisé en ce que les positions d'arrivée sont disposées verticalement les unes au-dessus des autres sur un support et forment avec ce dernier une unité de construction qui peut être en entier éloignée du récipient.

4. Récipient selon la revendication 3, caractérisé en ce que le support forme une unité de construction avec les positions d'arrivée et l'organe distributeur.

5. Récipient selon la revendication 2, caractérisé en ce que la pompe à circulation et l'organe distributeur forment une unité de construction qui est reliée par des conduites avec les positions d'arrivée.

6. Récipient selon la revendication 1, 2 ou 5, caractérisé en ce que les positions d'arrivée sont disposées et réparties sur la périphérie du récipient, au voisinage du fond ou au-dessus du niveau du milieu agité.

7. Récipient selon l'une quelconque des revendications précédentes, caractérisé en ce que les positions d'arrivée sont constituées comme des soupapes d'arrêt ou sont prévues avec elles.

8. Récipient selon la revendication 3, caractérisé en ce que le support avec les positions d'arrivée est réalisé sous la forme d'un briseur de courant à doigts, et de préférence disposé de manière à pouvoir pivoter autour de son axe vertical.

9. Récipient selon la revendication 3, caractérisé en ce que le support est constitué par un tube, les conduites de liaison aboutissant aux positions d'arrivée passant à l'intérieur du tube.

10. Récipient selon l'une quelconque des revendications précédentes, caractérisé en ce que le dispositif de circulation est dimensionné de manière que le composant de dosage quitte les positions d'arrivée avec une vitesse de sortie de 2 à 10 m/sec.

11. Récipient selon la revendication 1, caractérisé en ce que le dispositif de circulation comporte une pompe à circulation propre pour chaque position d'arrivée.

12. Procédé pour fournir un composant de dosage fluide dans un récipient à réaction dans lequel un milieu agité est agité dans une direction essentiellement tangentielle au moyen d'un agitateur tournant autour d'un axe essentiellement vertical, caractérisé en ce que le composant de dosage est introduit dans le milieu de façon intermittente, cycliquement et alternativement par plusieurs positions d'arrivée distribuées uniformément sur la hauteur et/ou la périphérie du récipient.

13. Utilisation du dispositif selon l'une des revendications 1-11, pour fournir de la lessive de soude pendant une réaction d'époxydation.

14. Utilisation du dispositif selon l'une des revendications 1-11, pour fournir de la lessive de potasse dans de l'acide naphtol-(2)-disulfonique-(6,8) recours de la précipitation du sel dipotassique de cet acide.

Fig. 1

Fig. 2

Fig. 3

Fig.4

Fig. 6

Fig. 5

Fig. 7

Fig. 14

Fig. 8

441a

422

431

441b

407

X

422

426

410

407

426

Fig. 10

Fig. 9

x

Fig. 11

Fig. 12

Fig. 13

Fig. 15

Fig. 16

7